Europäisches Patentamt

European Patent Office

Office européen des brevets

(19)

(11) Publication number: **0 023 803**
**A1**

(12) **EUROPEAN PATENT APPLICATION**

(21) Application number: **80302525.3**

(22) Date of filing: **24.07.80**

(51) Int. Cl.³: **A 01 C 7/04**

(30) Priority: **26.07.79 GB 7926092**

(43) Date of publication of application: **11.02.81**
**Bulletin 81/6**

(84) Designated Contracting States: **DE FR IT NL SE**

(71) Applicant: **Thomas, David William, Fraithwen, Tregynon, near Newton Powys. Wales (GB)**

(72) Inventor: **Thomas, David William, Fraithwen, Tregynon, near Newton Powys. Wales (GB)**

(74) Representative: **King, James Bertram, Kings Patent Agency Limited 146a Queen Victoria Street, London EC4V 5AT (GB)**

(54) **Seed drill apparatus.**

(57) A seed drill apparatus has a seed storage box SB with seed inlet manifold (2) to convey seeds to a rotatable collector wheel (5) having a number of peripheral seed receiving cavities (6). The seeds are ejected singly, assisted by a blade edge 11 running in a groove (5a) joining the centres of the cavities, through an aperture (B) in casing (1) to fall into a groove (8) around the periphery of a distributor wheel (7). The groove (8) is subdivided by stops (9) into arcuate sectors each of which receives a seed. A retardation device (12) catches a seed in the groove (8) and holds same until carried on by a stop (9). The seed falls to the ground through outlet (13). The wheel (7) has a peripheral speed equal to the linear speed of motion over the ground and wheel (5) rotates more slowly with a reduction dependent on the ratio between the number of cavities (6) and number of stops (9). The retardation device (12) ensures accuracy of spacing by providing for discharge of each seed only when in abutment with a stop (9).

ACTORUM AG

0023803
58465

- 1 -

<u>TITLE</u>

"Seed drill apparatus."

This invention relates to a seed drill apparatus for sowing seeds with accuracy of spacing along a row.

Conventional seed drills have distribution means which frequently result in missed or erratic seed spacing, this being due to the fact that the linear speed component of ejection cannot be accurately matched to the travel speed of the drill. Another disadvantage of such known seed drills arises from the shallow angle of seed ejection causing seeds to bounce on hitting the ground, resulting in large and erratic seed displacements. Accuracy is especially important for even growth of each plant for mechanical harvesting.

One object of this invention is to provide an improved construction of apparatus in which accurate and predictable placement of the seeds is made even at high travel speeds of the sowing equipment.

According to this invention there is provided a seed drill apparatus having an inlet manifold for a seed supply to convey seeds to a rotatable seed collector wheel including a plurality of seed receiving cavities in spaced location around the periphery thereof, a rotatable seed distributor wheel adjacent said collector wheel and including a groove to receive a seed from a
cavity to transfer same to a seed release outlet
the groove having one or more abutment stops with means
to bring a seed into contact with the stop prior to release
at the outlet.

The apparatus is arranged so that the fixed drive
ratio between the rotational speeds of the collector
wheel and the distributor wheel is equivalent to the
ratio between the number of receiving cavities in the
collector wheel and the number of abutment stops in the
distributor wheel. The distributor wheel thus rotates
relatively fast and has a peripheral speed equal to the
linear travel speed of the apparatus over the ground so
that the seeds are released without a linear ground speed
component. In an example the collector wheel has fourty
two cavities and the distributor wheel has 3 stops with
a ratio of 14:1 between the wheel speeds.

In such an arrangement the seed from a cavity can
be released to the distributor wheel over a fairly wide
arc and in order to ensure accuracy in release from the
distributor wheel to the ground an essential and
important feature of the invention is the means which
brings a seed into abutment with the stop thus ensuring
precise spacing of the sowed seeds. This means,
hereinafter called a "retardation means" may be

-3-

mechanical such as a spring finger device to draw the seed back onto the stop, a brush or arm or an air jet.

A seed ejector means may be provided to assist displacement of each individual seed from the collector wheel cavities perpendicularly downward into the groove of the distributor wheel, for example a blade may be located in the casing to effect this.

Such a blade is preferably in the form of a separate steel insert located between the collector and distributor wheels, the dispensing edge of which blade lies within a thin peripheral groove in the collector wheel along which groove the seed recepticles are spaced. Rotation of the collector wheel causes each seed to encounter the blade edge whereupon the seed is positively and accurately dispensed into the distributor wheel groove.

The apparatus preferably includes suitable ground drive means, for example wheels, which, through a suitable gearing arrangement, cause both collector and distributor wheels to rotate. The speed of either wheel may be made variable by an arrangement of gears *sprockets* and preferably the angular rotation of distributor wheel is of the order of twenty times that of the seed collector wheel. Additionally, the peripheral speed of the distributor wheel is made equal *to* the ground speed at which the seed drill apparatus travels.

-4-

By arranging for the peripheral boundary of both wheels to be enclosed in a casing the seeds are maintained in their individual cavities and within the groove respectively, the casing is preferably a casting of metal and prevents gravitational displacement except where transfer between the wheels occurs and release to the ground.

The accurately positioned dispensing blade edge, together with a specific relationship in the drive ratio between the collector and distributor wheels ensures that only one seed falls into each section of the seed retaining groove defined by the stops in the distributor wheel.

The invention is further described by way of example with reference to the accompanying drawings illustrating a preferred embodiment and in which:

Figure 1     is a side elevation in section of a seed drill apparatus according to the invention,

Figure 2     is a view of part of the periphery of a modified collector wheel;

Figure 3     is a view of part of the periphery of a modified distributor wheel,

Figure 4          shows a fragmentary side view of the
                  casing part and one form of
                  retardation means,

Figure 4a         is a ~~side~~ view of the retardation
                  means looking in direction X as
                  marked on Figure 4,

Figure 4b         is a view looking in direction X
                  of Figure 4 showing the action of
                  the retardation means, and

Figures 5a to 5d  illustrate various further
                  retardation devices,

The drawings show only the seed drill unit with
which the invention is concerned and the main construction
which may include a number of units with ground bearing
wheels, furrow forming and covering coulters is not
shown as such parts are well known.

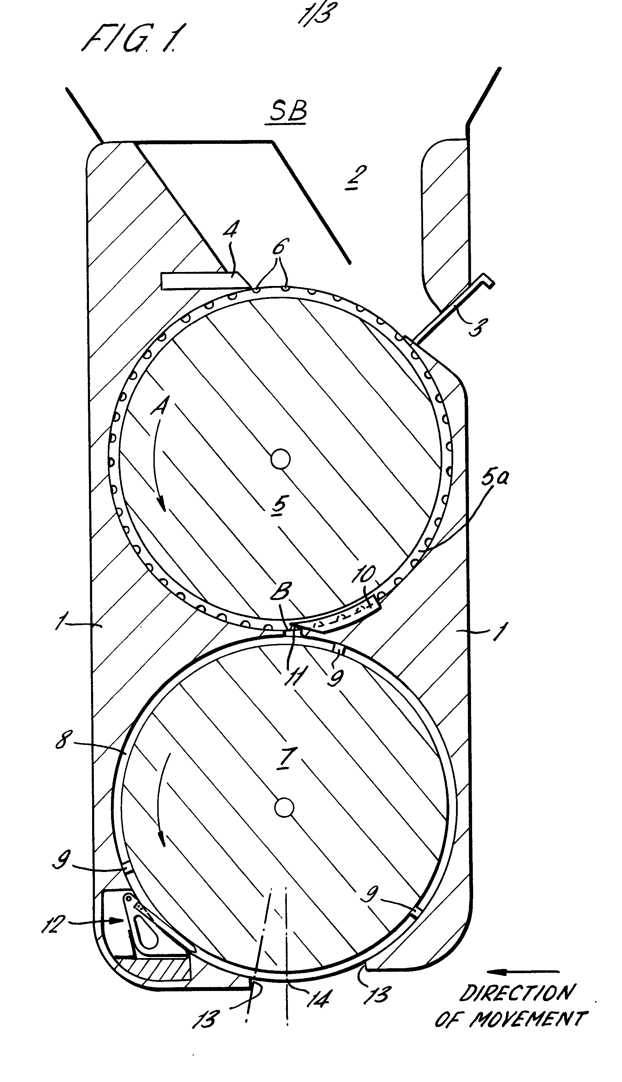

    Referring firstly to Figure 1, the seed drill
apparatus comprises a cast alloy casing 1 provided with
a seed inlet manifold 2 which receives bulk seed from a
seed box 5b located above the apparatus.  This manifold 2
includes a surplus seed removal gate 3 manually operable
to remove unused seed.  Within the casing a scraper blade
4 is situated in close proximity to a collector wheel 5
such that upon rotation of the latter only one seed will
enter each cavity 6.  The cavities 6 are of a size only

0023803

slightly larger than each seed and equidistantly spaced around the circumference of the collector wheel 5.  In practice the cavities will be a standard size to receive

graded natural or
pellitised seeds where the actual seed is small.

The wheel 5 is readily changeable for different

size seeds and is located closely adjacent the casing

so that seeds are retained in the cavities during rotation in the direction A.  The wheel 5 thus serves to collect individual seeds from the supply and transfer them in

at a controlled rate to a discharge point defined by an aperture B in the casing.

To effect consistent discharge an edge 11 of a seed ejector blade 10 lies in a thin groove 5a around the periphery of the collector wheel 5 and passing through each seed cavity 6.  The blade contacts each seed as it reaches the aperture B and ejects same to fall into a

continuous groove 8 extending around the periphery of a distributor wheel 7.  The distributor wheel 7 is located also in the casing 1 immediately beneath the collector wheel 5.  The seed retaining groove 8 is divided into sectors by a number of stops or walls 9 forming abutments

and against which each seed dispensed from the collector wheel is brought into firm contact during rotation of the wheel 7 in the final part of the rotation before release of a seed.

BAD ORIGINAL

To achieve this there is provided towards the bottom of the casing 1 and prior to a seed release outlet 13 in the casing 1, a retardation means 12 which serves to retard or hold back a seed which may be in the groove 8 before the stop 9. Rotation of the distributor wheel will then cause the stop to catch up with the seed held by means 12 temporarily and to thereafter dispense such seed through the outlet 13 in the apparatus casing at the correct instant.

The retardation device is an important feature for without this the exact point of discharge of the seed, in time, is unpredictable because it can lie anywhere in the sector of the groove between two adjacent stops, and can "bounce" within the groove resulting in unpredictable spacings.

The retardation device 12 is therefore located prior to the release point 14 for the seed, which lies within 10 to 20$^{o}$ before bottom dead centre of the stop 9 in distributor wheel 14.

Gearing of both wheels 5 and 7 to the ground drive is by an arrangement of chain and sprockets (not shown) located on the rear of the cast body 1.

-8-

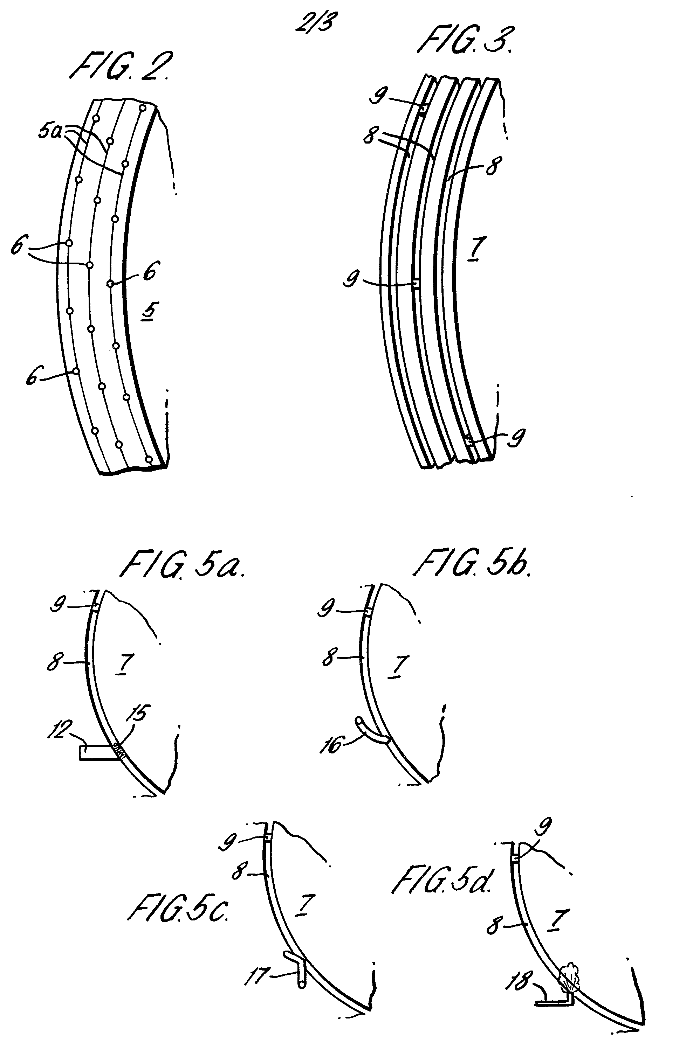

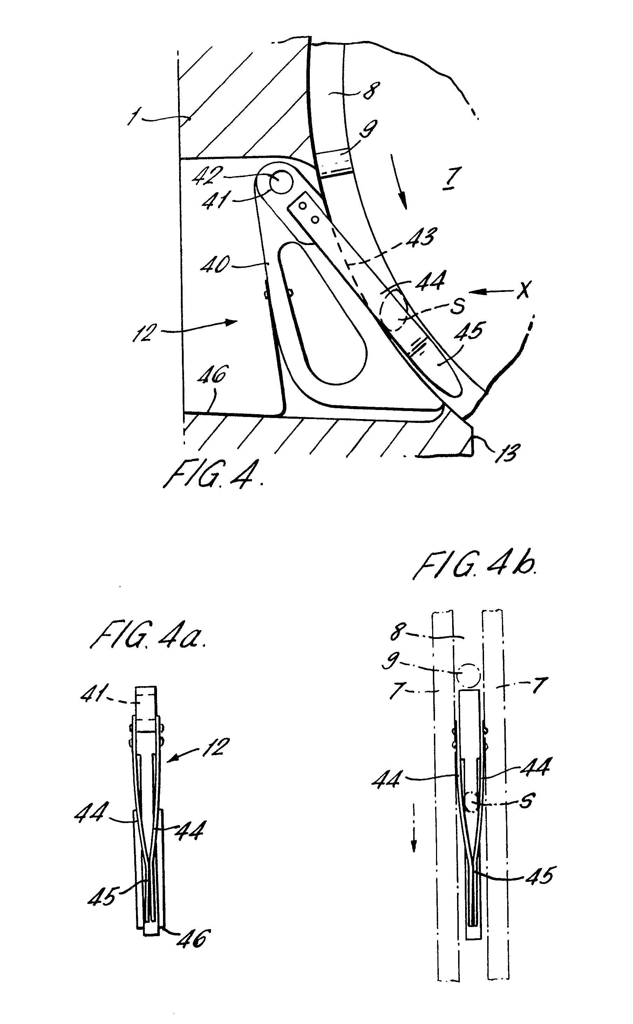

Referring to Figures 2 and 3, ~~and~~ in a further embodiment of the invention more than one peripheral row of seed cavities 6 *with grooves 5a* can be arranged around the circumference of the seed collector wheel 5 and in this case identical numbers of grooves 8 are required in the distributor wheel 7, so arranged as to lie in the corresponding vertical plane and each provided with abutment walls or stops 9 to effectively release each seed.

This modification is used when it is required to effect seeding at a greater speed or at closer spacing in relation to the forward speed of the drill. In practice the lateral spacing of the seeds is insignificantly small so that, in the case shown, three times as many seeds are sown as in the previous embodiment.

Figures 4, 4a and 4b show in more detail the retardation device 12. This comprises a metal carrier 40 with an aperture 41 which engages a spigot 42 in the casing and shaped at 43 to conform with the periphery of the wheel 7. Two spring steel blades 44 are spaced and lie within the groove 8 the blades are shaped to come together at their ends 45 thus trapping any seeds that may lie in the groove until the stop 9 abuts the seed and causes the blades to open to allow same to pass. The seeds will thus be consistently brought into abutment with stop 9 prior to release.

A leaf spring 46 ensures that the retardation device is pressed towards the wheel 7 through pivoting about spigot 42.

Figure 4b shows the action and positioning of the two springs in the groove, with the groove 8, pin 9 and seed 5 shown in chain dot.

Figures 5a to 5d show diagrammatically other forms of retardation devices.

In each Figure, the distributor wheel 7 and associated groove 8 remain unchanged. Figure 5a shows a cartridge 12 with a nylon brush 15; Figures 5b and 5c show two forms of spring loaded fingers of PTFE, for example, arranged in different configurations 16 and 17 respectively; Figure 5d shows a right angle bend pipe 18 providing a low pressure air supply upwards into the groove 8.

The seed drill in accordance with this invention thus provides an apparatus and method for precision seed sowing, with greater control and less wastage than with prior art apparatus and enabling relatively high speeds to be achieved.

0023803

- 1 -

<u>CLAIMS</u>

1. A seed drill apparatus having an inlet manifold for a seed supply to convey seeds to a rotatable seed collector wheel including a plurality of seed receiving cavities in spaced location around the periphery thereof, arranged to pick up individual seeds from the supply and to convey same in a regular spaced manner for discharge to the ground, the apparatus being characterised by:- a rotatable seed distributor wheel adjacent said collector wheel and including a groove to receive a seed from a cavity to transfer same to a seed release outlet, the groove having one or more abutment stops with means to bring a seed into contact with the stop prior to release at the outlet.

2. A seed drill apparatus according to Claim 1, characterised by a resilient member engaging the groove and arranged to retard a seed sufficiently to being same into abutment with the stop the stop thereafter carrying the seed past the resilient member which yields.

3. A seed drill apparatus according to Claim 2, characterised by the resilient member being a leaf spring.

4.  A seed drill apparatus according to Claim 3, characterised by a resilient member comprising two leaf springs in side by side relationship with their one ends touching and positioned in the groove so that a seed enters the converging gap between the springs which may open to allow passage of the stop.

5.  A seed drill apparatus according to Claim 2, characterised by a finger of a resilient material or a rigid material resiliently mounted forming the resilient member, so that an end thereof engages the groove and is displaced temporarily by the stop.

6.  A seed drill apparatus according to Claim 1, characterised by an air jet directed into the groove against the rotational direction of the distributor wheel forming the means to bring the seed into engagement with the stop.

7.  A seed drill apparatus according to any one of the preceding Claims 2 to 5, characterised by the resilient member being detachably located adjacent the distributor wheel near the seed release outlet.

8.  A seed drill apparatus according to any preceding Claim, characterised by the collector and distributor wheels being positioned within a casing having portions closely adjacent the peripheries of each wheel over arcs through which the cavities or grooves are occupied by the seed whereby the seed is retained in said cavities or grooves during rotation of the wheels.

9. A seed drill apparatus according to Claim 8, characterised by the number of cavities in the collector wheel being a multiple (X) of the number of stops in the distributor wheel, the distributor wheel being driven at a rotational speed which is (X) times that of the collector wheel.

10. A seed drill apparatus according to Claim 8 or 9, characterised by the wheels being located in the casing with the peripheries closely adjacent and communicating through a seed transfer aperture in a dividing wall of the casing.

11. A seed drill apparatus according to any preceding Claim, characterised by the collector wheel having a peripheral slit passing through each cavity, an ejector blade engaging the slit and having an edge obliquely inclined to abut and eject a seed from the cavity for transfer to the distributor wheel.

12. A seed drill apparatus according to any preceding Claim, characterised in that the seed release outlet comprises an opening positioned at $10^{\circ}$ to $20^{\circ}$ before the bottom dead centre position of an abutment stop and just after the means to bring the seed into contact with the stop.

13. A seed drill apparatus according to any one of Claims 8, 9 or 10, characterised by the upper part of the casing forming the inlet manifold with the base thereof defined by the periphery of the collector wheel.

0023803

FIG. 1

1/3

SB

DIRECTION
OF MOVEMENT

0023803

2/3

FIG. 2.

FIG. 3.

FIG. 5a.

FIG. 5b.

FIG. 5c.

FIG. 5d.

FIG. 4.

FIG. 4a.

FIG. 4b.

European Patent
Office

**EUROPEAN SEARCH REPORT**

0023803

Application number

EP 80 30 2525.3

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | DE - C - 882 919 (M.L. GERBER)  <br> * page 2, lines 29 to 70; fig. 1 * <br> -- | 1,8,10, 12,13 | A 01 C  7/04 |
| | DE - A - 1 457 832 (W.KNOLLE)  <br> * claim 1; fig. 1 to 3 * <br> -- | 1 | |
| | DE - C - 1 138 269 (H. FÄHSE & CO.)  <br> * column 2, lines 40 to 41; fig. 1, 3 * <br> -- | 11 | |
| | DE - U - 1 904 282 (X. FENDT & CO.)  <br> * page 4, lines 10 to 12; fig. 1, 2 * <br> ---- | 11 | TECHNICAL FIELDS SEARCHED (Int.Cl.3) <br><br> A 01 C  7/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search  Berlin | Date of completion of the search  29-10-1980 | Examiner  SCHOFER |
|---|---|---|

EPO Form 1503.1  06.78